Europäisches Patentamt

(18) European Patent Office

Office européen des brevets

(11) Publication number: **0 134 026**
**B1**

(12) EUROPEAN PATENT SPECIFICATION

(45) Date of publication of patent specification: **14.10.87**

(51) Int. Cl.⁴: **H 01 B 1/12**

(21) Application number: **84109489.9**

(22) Date of filing: **09.08.84**

(54) A method of manufacturing a macromolecular material conducting current on its surface.

(30) Priority: **09.08.83 PL 243360**

(43) Date of publication of application:
**13.03.85 Bulletin 85/11**

(45) Publication of the grant of the patent:
**14.10.87 Bulletin 87/42**

(84) Designated Contracting States:
**DE FR GB IT NL**

(56) References cited:
**EP-A-0 022 271**
**FR-A-2 211 464**

**JOURNAL OF PHYSICS. D. APPLIED PHYSICS,
vol. 16, no. 9, September 1983, pages 1737-
1740, Dorking, GB; L. BURDA et al.: "Highly
anisotropic conductive materials: polymers
doped with crystalline charge-transfer
complexes"**

(73) Proprietor: **POLSKA AKADEMIA NAUK
CENTRUMBADAN MOLEKULARNYCH I
MAKROMOLEKULARNYCH
ul. Boczna 5
90-364 Lodz (PL)**

(72) Inventor: **Kryszewski, Marian, Prof. Dr.
ul Dabrowskiego 3/6
Lódz (PL)**
Inventor: **Jeszka, Jeremiasz, Dr.
ul.Wschodnia 74/5
Lódz (PL)**
Inventor: **Ulanski, Jacek, Dr.
ul.Wieckowskiego 48/19
Lódz (PL)**
Inventor: **Tracz, Adam, M.Sc.
ul.Wiazowa 6
Lódz (PL)**

(74) Representative: **Hansen, Bernd, Dr.rer.nat. et al
Hoffmann, Eitle & Partner Patentanwälte
Arabellastrasse 4
D-8000 München 81 (DE)**

## Description

The invention concerns a method of manufacturing a macromolecular material conducting current on its surface by the surface introduction of conducting complexes. The known methods of modifying the surface of macromolecular materials so that their surface should conduct electric current comprise the introduction of conducting materials on the surface of macromolecular materials, the induction of chemical reactions between conducting substances and a macromolecular material, and coating the surfaces of objects made of macromolecular materials with conducting lacquers.

The above methods have been described for example in the book by R. H. Norman "Conductive Rubbers and Plastics", Appl. Sci. Ltd., London, 1970, and by Kirk-Othmer "Encyclopedia of Chemical Technology" under entries "Antistatic Agents" and "Polymers, Conductive". For the purpose of imparting screening properties and of earthing polymeric coats and objects where higher surface conductances are required, use is made of coating surfaces with a metal or metal compound layer by vacuum evaporation, cathode sputtering, plating or flame sputtering, which requires complicated multi-stage processes (DE—OS—3,112,104), or coating surfaces with conducting lacquers containing admixtures of metallic and graphite powders, or black (Jap. Kokai Kokkyo Tokkyo Koho J.P. 78,102,930). This requires, however, the use of considerable amounts of expensive noble metals, if the coat is to retain good properties and not to undergo surface oxidation. Besides, coating a plastic material with a metal layer can unfavourably affect its useful properties. The above methods have been described for example by J. P. Kosiarski (Polym. Plast. Techn. Eng. 13,183, 1979). For the purpose of imparting anti-static properties to materials made from polymers, the so-called anti-static agents are used, among them being organic ionic salts deposited to surface in the form of a film from solution or in the form of an aerosol, or appropriate macromolecular compounds, such as for example in-situ-crosslinked polyelectrolytes (US—PS—3,021,332 or GB—PS—991,485).

Anti-static agents, most frequently cationic surface-active agents can also be introduced into the bulk of a macromolecular material; then, by gradually diffusing to the surface, they could form on it a layer capable to transport electric charges (Catenao SN, Antistatic Agent Products Bulletin, American Cyanamid Co.).

The above methods are, however, unreliable, antistatic properties depending on environmental humidity and, additionally, the thin layer being easily abraded or washed away.

The methods involving chemically binding the antistatic agent to the base, such as surface sulphonation or subjection to the action of low temperature plasma give more stable coats which, however, require complicated manufacturing methods; these methods have been described for example by D. A. Seanor (Polym, Plast. Techn. Eng. 3,69, 1974).

The above-described anti-static agents do not allow one to obtain layers having a strictly definite and constant resistance and capable of being used in electrotechnics and electronics as, for example, resistance components.

Also known are the methods of obtaining current-conducting macromolecular materials by adding to polymers the admixtures that form complexes with transfer of charges, or Lewis acids. These methods have been described in a review by J. Ulański, J. K. Jeszka and M. Kryszewski in Polym, Plast. Technol. Eng. 17,139 (1981).

For example, a method is known, whereby a macromolecular material conducting electric current in the bulk is obtained by crystallising small (of the order of 1%) amounts of conducting complexes with charge transfer during the process of obtaining film from solution (Polish patent No. 116859). The materials obtained by that method show, however, volume conductance, which is not always desirable and, besides, require large amounts of admixtures.

The phenomenon and crystallisation of charge transfer complexes during the process of casting polymeric films from solution or, after soaking the polymeric matrix with a solution of the charge transfer complex is also used to obtain dielectric materials of high dielectric constants (Jpn. Kokai Tokkyo Koho J.P.—57,121,055; J.P.—79,11947; J.P.—79,12500; Jpn. Kokai 78,69242).

In these materials, however, use is made of high contents of admixtures, and the conductance of these materials is low.

Also known are the methods of obtaining current-conducting macromolecular materials that consist of polymeric and molecular bases and substances dispersed in them and capable of charge-transfer complexes or the so-called Lewis acids, for example iodine, $AsF_5$, and alkaline metals. These admixtures are introduced by pouring films from a common solution of the polymer and admixture by polymerising one of the components of the complex, and soaking the polymer with a solution of the admixture or the vapour of the admixture, in the electrochemical way, etc. (DE—OS—3,105,449; Jpn. Kokai Tokkyo Koho 79, 18853; Jpn. Kokai 77106496, 7713594, 7711740, 7825700). The above materials show a high conductance, but with very high admixture contents. Besides, the admixtures used show a low resistance to the action of weathering agents (such as oxygen or water) and to that of light and, also, frequently show a tendency to diffuse out of the polymeric base.

In addition to the above, these methods can be used for imparting conducting properties to certain types of polymers only, i.e. those capable of forming charge-transfer complexes or, also, require the polymer to be specially pretreated, as for example dehydration. The method of obtaining a macromolecular material that conducts electric current on its surface by way of introducing conducting complexes as per the invention involves subjecting the surface of a non-conducting polymeric material containing an addition of an electron donor and/or an electron acceptor in an amount of 0.2—5% by weight to the action of an organic solvent, a mixture of organic solvents or their vapours, which in the case when only one component of the complex is added to the polymeric material, contain the second component of the complex in an amount of 0.1 to 4.0% by weight.

Compounds having a small molecular mass and capable of forming highly conducting charge-transfer complexes are used as electron donors and acceptors in the method according to the invention.

According to the invention, tetrathiotetracene, tetrathiofulvalene, tetraselenofulvalene and their derivatives are preferably used as electron donors, whereas tetracyanoquinomethane, tetracyanonaphthoquinone and their derivatives are preferably used as electron acceptors. some of the chemical substances mentioned herein for use in the method according to the invention as electron donors or electron acceptors, capable of forming conducting charge transfer complexes and their features are among others, claimed as new compounds in patent FR—A—2211 464.

The non-conducting polymeric material used in the method as per the invention and consisting of a polymer and an addition of a donor and/or an acceptor dissolved in the former can be obtained in any way and occur in the form of a film and can also be applied as a layer onto various objects or subjected to another treatment by, for example, moulding or extruding and obtained in the form of object of required shape.

The above material is next subjected to the action of an organic solvent, a mixture of organic solvents, possibly containing an addition of a donor or an acceptor or their vapours by, for example, dampening, wetting, sprinkling, vapour blowing, etc.

The penetration of the surface layer of the polymeric material by the solution or vapour of the solvent causes a conducting complex to be formed and crystallised in that layer in the form of a conducting lattice and, besides, the surface crystallisation of a polymeric layer, which favourably affects the formation and distribution of crystallites.

By the method as per the invention, the polymeric material subjected to the action of a solution may contain an addition of only one component of the complex, i.e. either a donor or acceptor. In that case, the second component of the complex is supplied to the surface of the polymeric material together with the organic solvent used.

The kinds of the organic solvents used by the method according to the invention do not play an essential role, since they are removed during the drying of the surface immediately after being used, the solvents being selected depending on the polymeric material used.

For the purpose of improving the properties of the conducting layer, e.g. mechanical strength, the organic solvent can also contain some amounts of a polymer, the latter forming the base or another polymer.

The macromolecular material conducting electric current on its surface and obtained by the method according to the invention is characterised by a low surface resistivity of the order of $10^2$—$10^{10}$ $\Omega$, the latter being regulated by the concentration of the electron donor and/or acceptor and process conditions. Besides, it shows a weak dependence of conductance on temperature over a wide temperature variation range.

Apart from that, the charge-transfer complex occurring in the polymer base in the crystalline form shows a high resistance to the action of weathering agents and light and does not show any tendency to diffuse from the polymer. The thickness of the current-conducting surface layer of the polymeric material obtained by the method as per the invention can vary and in some instances, very thin films for example, can extend across the entire bulk of the film and, consequently, bulk-conducting films can be obtained.

Thanks to various concentrations and combinations of donors and/or acceptors, various organic solvents and their mixtures and vapours having been used on the various parts and sides of the surfaces of the polymeric material being treated (also for example on various surfaces of an object), the method according to the invention enables a surface to be obtained, characterised by different electric properties, i.e. showing different conductances at different parts different resistance varying at a gradient along the surface and different anisotropic conductance.

The macromolecular material conducting electric current on its surface and obtained by the method as per the invention is suited for wide application. It can be used for removing electric charges, screening electromagnetic radiation, obtaining conductance or resistance paths, and also one-side conducting films for use in capacitors, sun batteries, electrochemical cells and semi-conductor components.

The examples provided below illustrate in more detail the method as per the invention without restricting its range.

Example I

100 parts by weight of a polycarbonate have been dissolved in 2500 parts by weight of chlorobenzene at a temperature of 370 K, whereafter 1 part by weight of tetrathiofulvalene and 1 part by weight of tetracyanoquinodimethane were added and also dissolved at the same temperature. The solution thus prepared was poured onto a glass plate at a temperature of 360 K.

A 20 μm thick film of uniform yellow colouring and not conducting electric current has been thus obtained. The material thus initially obtained was then placed in the saturated ethylene chloride vapour at a temperature of 300 K for 1 min. As a result, the film changed its colouring to greyish and crystallites of the charge-transfer complex appeared in its surface layer, that were visible under the microscope. The surface resistivity of the material thus obtained amounts to $10^4$ Ω at room temperature.

Example II

100 parts by weight of a polycarbonate have been dissolved in 4000 parts by weight of chlorobenzene and, then, 2 parts by weight of tetracyanquinodimethane were added and also dissolved at that temperature. The solution thus prepared was poured onto a polyester film at a temperature of 370 K.

After the solvent had been evaporated, a 10 μm thick layer of uniform yellow colouring, not conducting electric current and well adhering to the polyester, was formed.

The surface of the material thus initially obtained was then wetted with a 0.2% by weight tetrathiofulvalene solution in a chlorobenzene—n-heptane mixture at a ratio of 1:3 and dried after 5 minutes with hot air. As a result of that the surface layer of the material changed its colouring to greyish and crystallites of the conducting complex visible under the microscope appeared in it. The surface resistivity of the material thus obtained is $3 \times 10^4$ Ω at room temperature.

Example III

100 parts by weight of polymethyl methacrylate have been dissolved in 2500 parts by weight of ortho-dichlorobenzene at a temperature of 400 K, whereafter 1 part by weight of tetrathiofulvalene and 1 part by weight of tetracyanquinodimethane were added and also dissolved at that temperature. The solution thus obtained was poured onto a glass plate at a temperature of 390 K.

A 30 μm thick film of uniform yellow colouring and not conducting electric current has been obtained. One side of the film thus initially obtained has been subjected to the action of the saturated vapour of ethylene chloride at a temperature of 300 K for a time of 0.5 min and dried in a jet of warm air. As a result, the surface of the film showed a surface resistance of $10^5$ Ω at room temperature. Next, the other side of the film was subjected to the action of the saturated vapour of ethyl-methyl ketone for a time of 1 min. at a temperature of 300 K and dried in a jet of warm air.

As a result, that surface of the film showed a surface resistance of $4 \times 10^2$ Ω at room temperature, practically constant ($\pm2\%$) at 330 K and increasing by about 120% with a drop in temperature down to 80 K.

## Claims

1. A method of rendering a macromolecular material capable of conducting electric current on its surface by the surface introduction of conducting complexes wherein 0.2 to 5% by weight of an electron donor and/or acceptor is added to a non-conducting polymeric material which is then formed into a film, layer or other shaped object, the surface of which is next subjected to the action of an organic solvent, mixture of organic solvents or their vapour which, when only one of the electron donor or acceptor has been added to the polymer, also contains 0.1 to 4.0 wt.% of the complementary acceptor or donor.

2. A method as per claim 1, characterized in that tetrathiotetracene, tetrathiofulvalane, tetraselenofulvalene and their derivatives are used as electron donors.

3. A method as per claim 1, characterized in that tetracyanquinodimethane, tetracyannaphtho-quinone and their derivatives are used as electron acceptors.

## Patentansprüche

1. Verfahren zur Herstellung eines auf seiner Oberfläche elektrisch leitfähigen Makromoleku-larmaterials durch Einbringen leitender Komplexe in die Oberfläche, indem 0,2 bis 5 Gew.-% eines Elektronendonators und/oder -akzeptors einem nicht-leitenden polymeren Material zugegeben werden, welches dann zu einem Film, einer Schicht oder einem anderen Gebilde geformt wird, wobei die Oberfläche desselben dann der Einwirkung eines organischen Lösungsmittels, eines Gemisches organischer Lösungsmittel oder deren Dampf unterworfen wird, wobei dieses, für den Fall dass dem Polymeren entweder nur der Elektronendonator oder der -akzeptor zugegeben wurde, auch 0,1 bis 4 Gew.-% des komplementären Akzeptors oder Donators enthält.

2. Verfahren nach Anspruch 1, dadurch gekenn-zeichnet, dass Tetrathiotetracenen, Tetrathioful-valan, Tetraseleno-fulvalen und deren Derivate als Elektronendonatoren verwendet werden.

3. Verfahren nach Anspruch 1, dadurch gekenn-zeichnet, dass Tetracyanchinodimethan, Tetracy-annaphthochinon und deren Derivate als Elektronenakzeptoren verwendet werden.

## Revendications

1. Un procédé pour rendre un matériau macromoléculaire apte à conduire le courant électrique sur sa surface par l'introduction superficielle de complexes conducteurs, dans lequel on ajoute 0,2 à 5% en poids d'un donneur d'électrons et/ou d'un accepteur d'électrons à un matériau polymère non-conducteur qui est ensuite façonné en film, couche ou autre forme d'objet, la surface duquel est ensuite soumise à l'action d'un solvant organique, d'un mélange de solvants organiques ou de leur vapeur, qui lorsqu'on a seulement ajouté un donneur d'électrons ou un accepteur d'électrons au polymère, contient également 0,1 à 4% en poids de l'accepteur ou du donneur complémentaire.

2. Un procédé selon la revendication 1, caractérisé en ce qu'on utilise en tant que donneurs d'électrons le tétrathiatétracène, le tétra-thiafulvalène, le tétrasélénafulvalène et leurs dérivés.

3. Un procédé selon la revendication 1, caractérisé en ce qu'on utilise en tant qu'accepteurs d'électrons le tétracyanoquinodiméthane, le tétracyanonaphtoquinone et leurs dérivés.